# EUROPÄISCHE PATENTSCHRIFT

(11) **EP 2 639 012 B1**
(45) Veröffentlichungstag und Bekanntmachung des Hinweises auf die Patenterteilung: **30.04.2014**
(21) Anmeldenummer: 12159589.6
(22) Anmeldetag: 15.03.2012
(51) Int. Cl.: B23Q 17/24

(54) **Verfahren zum Betrieb einer Bearbeitungsmaschine, Projektionsvorrichtung für eine Bearbeitungsmaschine, Computerprogramm, digitales Speichermedium und Bearbeitungsmaschine mit einer solchen Projektionsvorrichtung**
Method for operating a processing machine, projection device for a processing machine, computer programm, digital storage medium and processing machine with such a projection device
Procédé de fonctionnement d'une machine de traitement, dispositif de projection pour une machine de traitement, programme informatique, support de stockage digital et machine de traitement dotée d'un tel dispositif de projection

(43) Veröffentlichungstag der Anmeldung: 18.09.2013
(73) Patentinhaber: Siemens Aktiengesellschaft, 80333 München (DE)
(72) Erfinder: Tauchmann, Sven, 09119 Chemnitz (DE); Vieweg, Andre, 09111 Chemnitz (DE)

(56) Entgegenhaltungen:
- EP-A1- 1 671 745
- JP-A- 7 328 894
- Ihlenfeld, Jens: "3D-Projektionen mit Plasma-Entladungen im freien Raum", , 3. Januar 2006 (2006-01-03), XP002680595, Gefunden im Internet: URL:http://www.golem.de/0603/43672.html [gefunden am 2012-07-23]

## Beschreibung

Die Erfindung betrifft zuvorderst ein Verfahren zum Betrieb einer Bearbeitungsmaschine. Im Weiteren betrifft die Erfindung auch eine bei einem solchen Verfahren verwendete oder verwendbar Projektionsvorrichtung und schließlich eine Bearbeitungsmaschine mit einer solchen Projektionsvorrichtung.

Unter dem Begriff Bearbeitungsmaschine werden hier und im Folgenden Werkzeugmaschinen, Roboter und andere numerisch gesteuerte Maschinen mit mehreren Freiheitsgraden zusammengefasst. Bearbeitungsmaschinen, also zum Beispiel Werkzeugmaschinen und Roboter, sind an sich bekannt. Bekannt sind ebenfalls Verfahren zum Betrieb solcher Bearbeitungsmaschinen. Beim Betrieb einer Fräsmaschine als Beispiel für eine Bearbeitungsmaschine wird zum Beispiel zumindest eine Bewegungsbahn für ein Werkzeug, nämlich einen Fräskopf oder dergleichen, vorgegeben und die Fräsmaschine bewirkt mit geeigneter, an sich bekannter Ansteuerung der häufig auch als Achsen bezeichneten Freiheitsgrade, dass der Fräskopf der vorgegebenen Bewegungsbahn folgt und damit in einem jeweils zu bearbeitenden Werkstück eine der Bewegungsbahn entsprechende Kontur entsteht. Alternativ zu einer Bewegung des jeweiligen Werkzeugs kommt auch eine Bewegung des Werkstücks in Betracht. Auch eine solche Bewegung des Werkstücks erfolgt mit einer entsprechenden Ansteuerung der jeweiligen Achsen der Bearbeitungsmaschine. Allgemein lässt sich damit festhalten, dass zum Betrieb von zum Beispiel Fräsmaschinen oder dergleichen als Beispiel für eine Bearbeitungsmaschine jeweils zumindest eine Kontur vorgegeben wird, die das jeweilige Werkstück erhalten soll, wobei die Kontur aufgrund einer Relativbewegung von Werkzeug und Werkstück entsteht, indem entweder das Werkzeug oder das Werkstück entlang einer zum Erhalt der Kontur notwendigen Bewegungsbahn bewegt wird.

Funktional gleiche Verhältnisse gelten für Löt- und/oder Bestückungsautomaten, bei denen zum Betrieb kein Werkstück mit Werkzeugen im Sinne einer abrasiven Formgebung bearbeitet wird, sondern bei denen ein Bestückungskopf Bestückungs- und/oder Lötvorgänge vornimmt. Roboter als weitere Ausführungsform von hier relevanten Bearbeitungsmaschinen eignen sich ähnlich wie Fräsmaschinen zum abrasiven Bearbeiten von Werkstücken, aber auch für Handhabungs- und Beschickungsvorgänge, für Schweißvorgänge (Schweißroboter in der Automobilindustrie), zum Bestücken von Leiterplatten, zum positionsgenauen Wiederholen von Bearbeitungsschritten etwa in der Medizintechnik, und so weiter.

In der JP 7 328894 A wird ein Inbetriebnahmeverfahren für eine Bearbeitungsmaschine beschrieben, bei dem zum Beispiel Positionsinformationen auf eine ebene Fläche der Bearbeitungsmaschine projiziert werden.

Noch nicht ganz optimal beim Betrieb solcher oder ähnlicher Bearbeitungsmaschinen ist allerdings, dass deren Programmierung komplex ist und einer genauen Kenntnis jeweils verwendeter Koordinatensysteme und deren sich gegebenenfalls ändernder Orientierung während des Betriebs einer Bearbeitungsmaschine bedarf.

Entsprechend erfordert eine Programmierung oder Inbetriebnahme usw. einer Bearbeitungsmaschine vom jeweiligen Experten ein außerordentlich gutes räumliches Vorstellungsvermögen und die Fähigkeit, dieses in eine Beschreibung von Bewegungsvorgängen im jeweiligen für die Programmierung der Bearbeitungmaschine vorgesehenen Koordinatensystem umzusetzen.

Eine Aufgabe der vorliegenden Erfindung besteht entsprechend darin, ein Verfahren zum Betrieb einer Bearbeitungsmaschine anzugeben, das einen Programmierer oder Bediener einer solchen Bearbeitungsmaschine bei deren Programmierung, Inbetriebnahme und/oder Benutzung unterstützt.

Diese Aufgabe wird erfindungsgemäß mit einem Verfahren mit den Merkmalen des Anspruchs 1 gelöst. Dazu ist bei einem Verfahren zum Betrieb einer Bearbeitungsmaschine vorgesehen, dass mit einem Projektor ein oder mehrere Zustände der Bearbeitüngsmaschine in einen Arbeitsraum der Bearbeitungsmaschine projiziert und dort für den Bearbeiter optisch wahrnehmbar dargestellt werden. Als Betrieb der Bearbeitungsmaschine wird dabei deren Programmierung, Inbetriebnahme, Wartung oder auch ein normaler Einsatzes der Bearbeitungsmaschine, also zum Beispiel während der Produktion, verstanden. Dabei ist bei dem Verfahren weiter vorgesehen, dass die Projektion einzelner oder mehrerer Zustände der Bearbeitungsmaschine in den Arbeitsraum der Bearbeitungsmaschine mit einem 3D-Projektor an einem vorgegebenen oder vorgebbaren Raumpunkt im Arbeitsraum erfolgt. Eine solche 3D-Projektion hat den Vorteil, dass im Vergleich zu den mit einer 2D-Projektion darstellbaren Maschinenzuständen, wie zum Beispiel Achs-Istwerten, also Momentanpositionen der Bearbeitungsmaschine und einzelner oder aller davon umfasster Freiheitsgrade, zusätzliche Informationen vermittelbar sind, die optimal in dreidimensionaler Form darstellbar sind. Schließlich ist bei dem Verfahren vorgesehen, dass die Projektion eine Darstellung von jeweils zumindest einzelnen Achsen eines beim Betrieb der Bearbeitungsmaschine verwendeten Koordinatensystems umfasst.

Der Vorteil der Erfindung besteht vor allem darin, dass aktuelle Maschinenzustände, also zum Beispiel Positionsinformationen oder ein Koordinatensystem der Bearbeitungsmaschine mit einer orientierungsrichtigen Darstellung einzelner oder aller Koordinatenachsen, direkt im Arbeitsraum der Bearbeitungsmaschine durch eine geeignete Projektion dargestellt werden, so dass sich der jeweilige Bediener für eine Programmierung, Inbetriebnahme, Wartung und so weiter der Bearbeitungsmaschine daran orientieren und Fehler vermeiden oder Fehler entdecken kann. Die Darstellung im Arbeitsraum der Bearbeitungsmaschine ist dabei besonders günstig, weil gleichzeitig einerseits die dargestellten Zustände der Bearbeitungsmaschine und andererseits auch eine Bewegung der Bearbeitungsmaschine beobachtet werden können. Dies ist für den Bediener angenehm, weil dieser nicht ständig eine Blickrichtung ändern muss und darüber hinaus Ermüdungserscheinungen durch dauerhaftes Umfokussieren der Augen vermieden werden. Zudem erlaubt die gleichzeitige Beobachtung einerseits der dargestellten Zustände der Bearbeitungsmaschine sowie andererseits der laufenden Bewegung der Bearbeitungsmaschine auf eventuelle Gefahrensituationen schnell zu reagieren, was nicht oder nur mit Verzögerung möglich ist, wenn der Bearbeiter solche Zustandsinformationen an einem Computerdisplay oder dergleichen angezeigt bekommt.

Ausgehend von der fertigen Erfindung ist aufgefallen, dass eine Projektion von Zustandsinformationen auf eine in einer üblichen Blickrichtung eines Nutzers befindliche Projektionsfläche mittlerweile bei einzelnen Personenkraftwagen bekannt ist. Dort werden als Zustände zum Beispiel eine aktuelle Geschwindigkeit, ein etwaiges Tempolimit oder Anweisungen eines Navigationssystems mittels eines Projektors an der Frontscheibe des Fahrzeugs dargestellt. Der Fahrer bekommt so den Eindruck, dass die Information vor ihm auf der Straße angezeigt wird und kann seine Aufmerksamkeit auf die Verkehrssituation und den Straßenverlauf konzentrieren und muss seinen Blick nicht abwenden, um solche Informationen von üblicherweise im Armaturenbrett befindlichen Anzeigeinstrumenten abzulesen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer nicht beanspruchten Ausführungsform des Verfahrens ist vorgesehen, dass die Projektion einzelner oder mehrerer Zustände der Bearbeitungsmaschine in einen Arbeitsraum der Be-arbeitungsmaschine zusätzlich mit einem 2D-Projektor auf eine im Arbeitsraum befinclliche Fläche erfolgt. Als 2D-Projektor kommt grundsätzlich jedes in dieser Hinsicht übliche Gerät, also zum Beispiel ein sogenannter Beamer, in Betracht. Spezielle Ausführungsformen solcher Beamer werden als Pico-Beamer oder LED-Beamer bezeichnet. Als im Arbeitsraum befindliche Fläche für die Projektion kommen eine Maschinenwand oder dergleichen, etwa eine Arbeitszellenbegrenzung, oder auch eine im Arbeitsraum installierte Scheibe in Betracht. Die von der Projektion dargestellten Informationen können auch Teile der sogenannten Mensch-Maschine-Schnittstelle (HMI) umfassen, also Darstellungen, wie sie normalerweise an einem sogenannten Operator Panel (OP) zur Programmierung und/oder Bedienung der Bearbeitungsmaschine erfolgen.

Als ein Beispiel für die weiter oben erwähnten, mit einer 3D-Projektion zusätzlich darstellbaren Information ist eine Darstellung eines Koordinatensystems der Bearbeitungsmaschine zu nennen, wobei die Projektion eine orientierungsrichtige Darstellung einzelner oder aller Koordinatenachsen eines solchen Koordinatensystems umfasst, also mit einer jeweiligen Orientierung der Koordinatenachsen im Raum, wie dies der tatsächlichen Orientierung des jeweiligen Koordinatensystems entspricht. Als in dieser Hinsicht darstellbare Koordinatensysteme kommen ein Werkstückkoordinatensystem (WKS), ein Maschinenkoordinatensystem (MKS), ein Basiskoordinatensystem (BKS) und/oder ein virtuelles Koordinatensystem (KOS) in Betracht. Hinsichtlich eines jeweils dargestellten Koordinatensystems ist eine Auswahl durch den Benutzer möglich. Dabei kann ein Koordinatensystem, zum Beispiel das Werkstückkoordinatensystem, als Standardeinstellung vorgewählt sein, so dass dessen Darstellung immer dann erfolgt, wenn nicht ausdrücklich eine Projektion eines anderen Koordinatensystems angewählt wurde.

Speziell die dreidimensionale Darstellung des jeweiligen Koordinatensystems (MKS, WKS, etc.) erleichtert dem Maschinenbediener zum Beispiel eine Vorstellung einer Werkzeugbewegung und einer Orientierung des Werkstücks im Raum. Dies ist ohne entsprechende Übung, vor allem bei Bewegungen von fünfachsigen Werkzeugmaschinen oder einem Roboter, ausgesprochen schwer.

Der Bediener hat auch bei der dreidimensionalen Projektion einzelner oder mehrerer Zustände der Bearbeitungsmaschine also sowohl das Werkstück wie auch den oder jeden ihn jeweils interessierenden Maschinenzustand, insbesondere das ihn jeweils interessierende Koordinatensystem, in seinem Blickfeld. Des Weiteren kann er, ebenfalls im Rahmen der 3D-Projektion, aktuelle Maschinenzustände oder Teile des jeweiligen NC-Programms im Blick behalten, ohne ständig auf ein Operator Panel (OP) oder dergleichen schauen zu müssen und damit abgelenkt zu sein. Dies erleichtert die Übersichtlichkeit und vereinfacht die Bedienung der Bearbeitungsmaschine.

Bei einer besonderen Ausführungsform des Verfahrens zum Betrieb einer Bearbeitungsmaschine, bei dem mit einem 3D-Projektor ein oder mehrere Zustände der Bearbeitungsmaschine in einen Arbeitsraum der Bearbeitungsmaschine projiziert werden, ist vorgesehen, dass der 3D-Projektor ein 3D-Laserprojektor ist, der für sukzessive ausgesandte Laserstrahlen jeweils einen Fokuspunkt des Laserstrahls variieren kann, um an einem so bestimmten Punkt einen für das menschliche Auge sichtbaren Effekt, insbesondere eine Plasmaentladung, auszulösen.

3D-Projektionen ohne zusätzliche Hilfsmittel wie zum Beispiel Folien, Leinwände, Brillen oder dergleichen befinden sich derzeit noch in einem Vorfeldstadium.

Die Firma Burton Inc. in Japan beschreibt im Internet (http://burton-jp.com/en/product.htm) eine dort als "True 3D-Display" bezeichnete Vorrichtung. Auch unter der Internetadresse http://www.golem.de/0603/43672.html findet sich ein Hinweis auf einen 3D-Projektor vom japanischen "National Institute of Advanced Industrial Science and Technology" (AIST), der Keio-Universität und der Firma Burton.

Dazu ist ausgeführt, dass der Projektor dreidimensionale Darstellungen in die Luft projizieren kann und dass dafür ein Fokuspunkt eines Lasers gezielt im Raum variiert wird, um eine Plasmaentladung in der Nähe dieses Fokuspunktes auszulösen, die für das menschliche Auge sichtbar ist. Ein solcher 3D-Projektor kommt auch für eine Verwendung bei dem hier vorgeschlagenen Verfahren zum Betrieb einer Bearbeitungsmaschine in Betracht.

Bei einer besonderen Ausführungsform des Verfahrens zum Betrieb einer Bearbeitungsmaschine ist vorgesehen, dass die Projektion, insbesondere eine Projektion eines Koordinatensystems, an einem Werkstücknullpunkt als vorgegebenem Raumpunkt erfolgt. Dann kann der Maschinenbediener unmittelbar bei Betrachtung des Werkstücks ein zum Beispiel dort dargestelltes Koordinatensystem beobachten.

Die oben genannte Aufgabe wird auch mit einer Projektionsvorrichtung gelöst, die einen Projektor, also einen 3D-Projektor wie oben beschrieben sowie eine Verarbeitungseinheit und einen Speicher umfasst. Bei der Verarbeitungseinheit handelt es sich dabei um einen Mikroprozessor oder dergleichen. In den Speicher ist ein mit der Verarbeitungseinheit ausführbares Computerprogramm geladen, mit dem ein Verfahren wie hier und nachfolgend beschrieben ausführbar ist. Die Projektionsvorrichtung kann dabei Teil einer Steuerungseinrichtung einer Bearbeitungsmaschine sein oder unabhängig von einer solchen Steuerungseinrichtung realisiert sein. Bei einer von einer Steuerungseinrichtung der Bearbeitungsmaschine unabhängigen Ausführungsform sind die Steuerungseinrichtung und die Projektionsvorrichtung in geeigneter Art und Weise kommunikativ verbunden oder verbindbar, so dass die Projektionseinrichtung zumindest Informationen über die jeweils darzustellenden Zustände der Bearbeitungsmaschine erhält. Als kommunikative Verbindung kommt jede übliche leitungsgebundene oder leitungslose Signal- und/oder Datenübertragung in Betracht. Als dabei jeweils zu übermittelnde Daten kommen entweder direkt die darzustellenden Zustände der Bearbeitungsmaschine oder jede geeignete Information, auf deren Grundlage die Verarbeitungseinheit der Projektionsvorrichtung diese selbst ermitteln oder berechnen kann, in Betracht.

Einzelne Aspekte der Erfindung sind dabei bevorzugt in Software implementiert. Die Erfindung ist damit einerseits auch ein Computerprogramm mit durch einen Computer, nämlich die Projektionsvorrichtung, ausführbaren Programmcodeanweisungen und andererseits ein Speichermedium mit einem derartigen Computerprogramm sowie schließlich auch eine Projektionsvorrichtung, in deren Speicher als Mittel zur Durchführung des Verfahrens und seiner Ausgestaltungen ein solches Computerprogramm geladen oder ladbar ist.

Damit betrifft die Erfindung insgesamt auch eine Bearbeitungsmaschine gemäß der eingangs vorgestellten Definition mit Mitteln zum Ausführen eines Verfahrens wie hier und nachfolgend beschrieben, insbesondere einer Projektionsvorrichtung wie ebenfalls hier und nachfolgend beschrieben.

Der Vorteil der Erfindung und ihrer Ausgestaltungen besteht damit insbesondere darin, dass die durch die Projektion eines oder mehrerer Maschinenzustände in den jeweiligen Arbeitsraum der Bearbeitungsmaschine zu Unterstützung des Bedieners grundsätzlich unbegrenzt im Hinblick auf den jeweils dargestellten Informationsumfang erweiterbar ist. Dies kann im Einzelfall zum Beispiel bis zu einer Darstellung von Abschnitten eines NC-Programms gehen, die bei einer jeweils stattfindenden Bewegung der Bearbeitungsmaschine relevant sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Fräsmaschine als Beispiel für eine Bearbeitungsmaschine, in deren Arbeitsraum mit einem Projektor als Betriebszustände der Bearbeitungsmaschine einzelne Positionsinforamtionen der von der Bearbeitungsmaschine umfassten Achsen in Form einer Projektion darstellt sind,
- FIG 2: einen Ausschnitt aus der Darstellung in FIG 1 mit einer Vergrößerung der als Projektion dargestellten Maschinenzustände,
- FIG 3: einen Ausschnitt aus einer Darstellung einer Bearbeitungsmaschine mit zumindest zwei rotatorischen Freiheitsgraden und einem in deren Arbeitsraum orientierungsrichtig als Maschinenzustand dargestellten Koordinatensystem,
- FIG 4: eine Darstellung ähnlich wie in FIG 3, wobei das orientierungsrichtig als Maschinenzustand dargestellten Koordinatensystem an einen Werkstücknullpunkt projiziert ist, und
- FIG 5: eine schematisch vereinfachte Darstellung einer Projektionsvorrichtung zur Darstellung einzelner oder mehrerer Zustände einer Bearbeitungsmaschine mit einem 2D oder 3D Projektor und deren grundsätzliche Anbringung an eine Steuerungseinrichtung zur Steuerung und/oder Überwachung der jeweiligen Bearbeitungsmaschine.

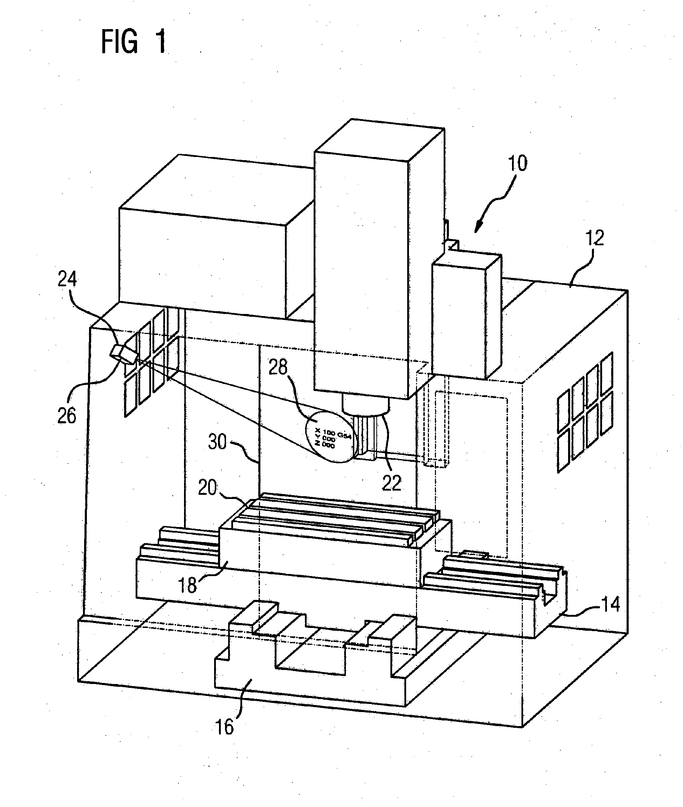

FIG 1 zeigt als Beispiel für eine Bearbeitungsmaschine 10 eine von einem Gehäuse 12 oder einem Schutzraum umgebene Fräsmaschine. Die dargestellte Fräsmaschine umfasst zwei translatorische Freiheitsgrade, die als in x-Richtung und y-Richtung bewegliche Achsen 14, 16 realisiert sind. Die einzelnen Achsen 14, 16 sind nur schematisch vereinfacht in Form von Profilelementen gezeigt, in denen jeweils, zum Beispiel mit einer Drehspindel oder dergleichen, eine Bewegung in x-Richtung und y-Richtung möglich ist.

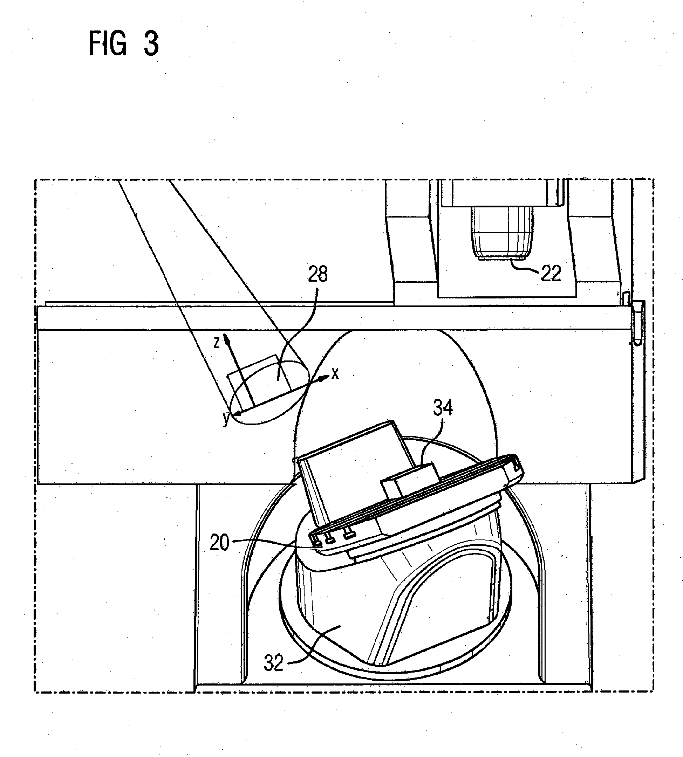

Auf dem Profil für die x-Achse 14 befindet sich ein Werkstückschlitten 18 und auf diesem wiederum ein Frästisch 20, also eine Montageplatte oder dergleichen, zum Anbringen eines mit der Fräsmaschine zu bearbeitenden Werkstücks (nicht gezeigt, siehe FIG 3). Zum Bearbeiten eines solchen Werkstücks weist die Fräsmaschine eine vertikal, also in z-Richtung orientierte Achse mit einer Frässpindel 22 oder ähnlichem und einer Werkzeugaufnahme auf. Mit der Werkzeugaufnahme ist in an sich bekannter Art und Weise ein Fräskopf oder dergleichen verbindbar und mit einem solchen Fräskopf (nicht dargestellt) kann die Bearbeitung des jeweiligen Werkstücks erfolgen.

Mit dem in x-Richtung und y-Richtung beweglichen Frästisch 20 und der in z-Richtung beweglichen Frässpindel 22 weist die dargestellte Fräsmaschine drei translatorische Freiheitsgrade auf. Die Kinematik der Fräsmaschine könnte auch so ausgeführt sein, dass der Frästisch 20 ortsfest und die Frässpindel 22 zusätzlich zu der translatorischen Beweglichkeit in z-Richtung auch mit einer entsprechenden Mechanik in x-Richtung und y-Richtung beweglich ist. Die konkrete Kinematik der Fräsmaschine oder jeder anderen Bearbeitungsmaschine 10, für welche die Fräsmaschine hier nur als Beispiel fungiert, ist im Übrigen für die Erfindung ohne besondere Bedeutung.

Die Bearbeitungsmaschine 10 umfasst einen Projektor 24, hier einen 2D-Projektor 26 oder der Bearbeitungsmaschine 10 ist ein solche Projektor 24, 26 zugeordnet, zum Beispiel während einer Inbetriebnahme. Mit dem Projektor 24, 26 werden ein oder mehrere Zustände der Bearbeitungsmaschine 10 in einen Arbeitsraum der Bearbeitungsmaschine 10 projiziert. Dies ist in FIG 1 als Projektion 28 gezeigt. Die Projektion 28 erfolgt auf eine Scheibe 30 als eine Möglichkeit einer für die Projektion 28 verwendbaren und im Arbeitsraum der Bearbeitungsmaschine 10 befindlichen Fläche. Anstelle der Scheibe 30 kann grundsätzlich auch jede andere geeignete Projektionsfläche Verwendung finden, also zum Beispiel bei einer in einem Gehäuse 12 befindlichen Bearbeitungsmaschine 10 eine Fläche eines solchen Gehäuses 12 oder jede sonstige Fläche, die zum Beispiel zur Begrenzung eines Schutzraums um die Bearbeitungsmaschine 10 ohnehin erforderlich ist.

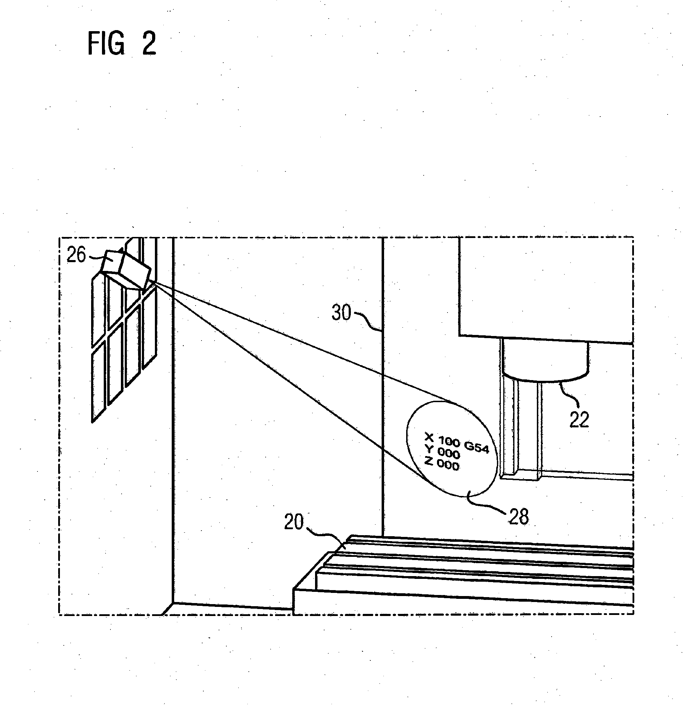

Als mit dem Projektor 24, 26 in den Arbeitsraum der Bearbeitungsmaschine 10 projizierte Zustände der Bearbeitungsmaschine 10 ist eine momentane Position der drei Freiheitsgrade der als Beispiel für eine Bearbeitungsmaschine 10 dargestellten Fräsmaschine gezeigt. Die projizierten Maschinenzustände lauten danach im Einzelnen "X 100 G54"; "Y 000"; Z 000". Dies ist in FIG 2 als Ausschnitt aus der Darstellung in FIG 1 in vergrößerter Form gezeigt. Die Projektion 28 erfolgt dabei an einem vorgegebenen oder vorgebbaren Raumpunkt im Arbeitsraum der Bearbeitungsmaschine 10, wobei der jeweilige Raumpunkt zum Beispiel mit einer Position auf der Projektionsfläche, nämlich zum Beispiel einer Scheibe 30 oder dergleichen, korrespondiert.

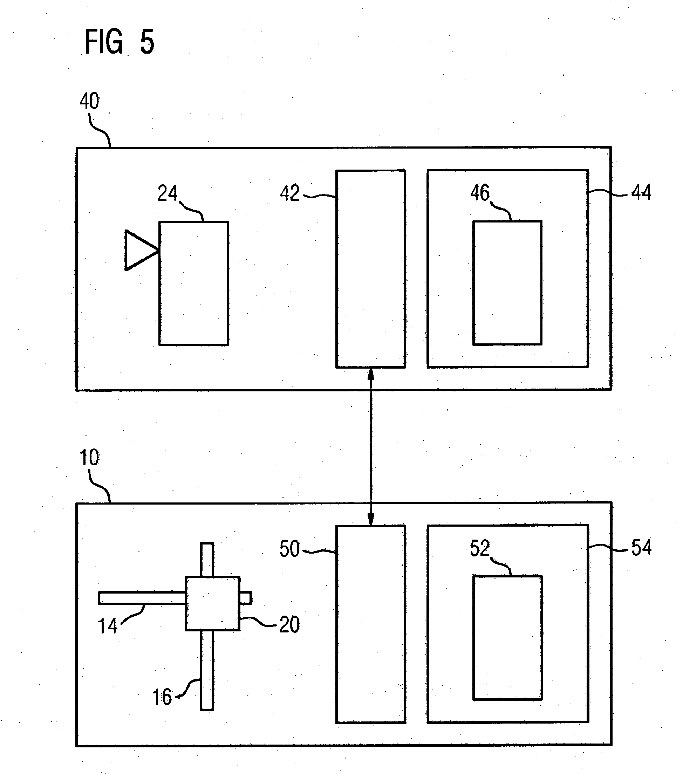

Der vorgegebene oder vorgebbare Raumpunkt als Ort der Projektion 28 kann durch eine geeignete Orientierung des Projektors 24, 26 oder eine von dem Projektor 24, 26 dafür umfasste Optik beeinflusst werden. Eine Beeinflussung der Orientierung des Projektors 24, 26 oder einer Optik des Projektors 24, 26 kann manuell oder automatisch, zum Beispiel abhängig von einer Bewegung der Bearbeitungsmaschine 10 oder des jeweiligen Werkstücks, erfolgen. Für eine automatische derartige Beeinflussung umfasst der Projektor 24, 26 oder eine den Projektor 24, 26 umfassende Projektionsvorrichtung (FIG 5) einen oder mehrere geeignete Aktoren, die mit Steuersignalen ansteuerbar sind, welche die beabsichtigte Beeinflussung, also zum Beispiel einen Schwenk des Projektors 24, 26, kodieren.

Die Projektion 28 einzelner oder mehrerer Zustände der jeweiligen Bearbeitungsmaschine 10 in deren Arbeitsraum, also zum Beispiel wie in FIG 1 und FIG 2 dargestellt in einen zentralen Bereich in einer Nähe eines in x-Richtung und y-Richtung verfahrbaren Frästisches 20 sowie einer in z-Richtung verfahrbaren Frässpindel 22, erlaubt es dem Bediener, den oder jeden jeweils projizierten Zustand der Bearbeitungsmaschine 10 parallel zu zum Beispiel einer Inbetriebnahme, einem Einrichtvorgang oder während der Bearbeitung eines Werkstücks zu beobachten, so dass eine kontinuierliche Beobachtung der Bearbeitungsmaschine 10 und der jeweils durchgeführten Bewegungen oder Aktionen möglich ist, ohne dass der Blick von der Bearbeitungsmaschine 10 oder aus deren Arbeitsraum abgewandt werden müsste. Dies stellt eine erhebliche Arbeitserleichterung für den Bediener dar und erlaubt ermüdungsfreies Arbeiten. Zudem ergibt sich ein Sicherheitsgewinn, weil eine Überwachung der Bearbeitungsmaschine 10 durch den Bediener dauerhaft erfolgen kann, ohne dass der Blick abgewandt werden müsste, um etwa eine Anzeige auf einem Bediengerät (OP; nicht dargestellt), auf dem solche Zustände ebenfalls grundsätzlich darstellbar sind, überwachen zu können.

FIG 3 zeigt einen Ausschnitt aus einer im Vergleich zu FIG 1 anderen Bearbeitungsmaschine 10. Der Unterschied liegt in zwei weiteren Freiheitsgraden, nämlich rotatorischen Freiheitsgraden. Dies erlaubt, die Orientierung des Frästisches 20 zu ändern, indem dieser zum Beispiel, wie dargestellt, nach links ausgerichtet ist. Eine Drehung der entsprechenden Rotationsachse erlaubt aber auch eine noch weitere Ausrichtung nach links oder entsprechende Ausrichtungen nach rechts. Darüber hinaus erlaubt eine weitere Rotationsachse eine Drehung des Frästisches 20. Dafür ist bei der dargestellten Bearbeitungsmaschine 10 eine unterhalb des Frästisches 20 befindliches Rundachse 32 vorgesehen, die selbst drehbar ist und damit die unterschiedlichen Ausrichtungen des Frästisches 20 ermöglicht und im Weiteren auch eine Drehung des Frästisches 20 selbst und unabhängig von der Rundachse 32 ermöglicht, so dass der Frästisch 20 in die dargestellte, im Wesentlichen horizontale Orientierung positioniert werden kann, aber auch in jede beliebige andere räumliche Orientierung gedreht werden kann.

Dies ermöglicht eine Erreichbarkeit eines hier auf dem Frästisch 20 angebracht gezeigten Werkstücks 34 von allen Seiten und in unterschiedlichen Orientierungen. Schon anhand der Erläuterung der Bewegungsmöglichkeiten der Bearbeitungsmaschine 10 und der davon umfassten rotatorischen und/oder translatorischen Achsen / Freiheitsgrade wird klar, dass es eines erheblichen räumlichen Vorstellungsvermögens bedarf, die mit einer Bewegung des Frästisches 20, also auch des darauf befindlichen Werkstücks 34, einhergehenden Änderungen von beim Betrieb der Bearbeitungsmaschine 10 verwendeten Koordinatensystemen nachzuvollziehen. Die Erfindung sieht hier zur Unterstützung eines Bedieners der Bearbeitungsmaschine 10 vor, dass mit einem Projektor 24 (FIG 1) in einer Ausführungsform als 3D-Projektor, insbesondere 3D-Laserprojektor, als Zustand der Bearbeitungsmaschine 10 mittels einer Projektion 28 ein beim Betrieb der Bearbeitungsmaschine 10 verwendetes Koordinatensystem dargestellt wird. Gezeigt ist dies in FIG 3 für ein kartesisches Koordinatensystem und man erkennt dessen drei Achsen, die mit den üblichen Bezeichnungen x, y und z versehen sind.

Diese Projektion 28 eines Koordinatensystems erfolgt an einem vorgegebenen oder vorgebbaren Raumpunkt im Arbeitsraum der Bearbeitungsmaschine 10 und eine solche Projektion 28 erlaubt - wie oben bereits für die 2D-Projektion erläutert - einem Bediener die optische Überwachung der jeweiligen Bearbeitungsmaschine 10 bei der Inbetriebnahme, bei einem Einrichtbetrieb, bei einer Wartung oder während der Produktion, indem gleichzeitig der oder jeder jeweils projizierte Maschinenzustand und eine Bewegung der Bearbeitungsmaschine 10, nämlich eine Bewegung der davon jeweils umfassten Achsen 14, 16, überwacht werden kann.

Zusätzlich oder alternativ zu der Projektion 28 eine Koordinatensystems wie in FIG 3 kann auch eine Projektion 28 wie oben im Zusammenhang mit FIG 1 und FIG 2 erläutert erfolgen, also eine Projektion 28 von Zuständen der Bearbeitungsmaschine 10, wie sie durch die Positionen der einzelnen Achsen 14, 16 gegeben sind. Die Art und die Anzahl der jeweils projizierten Zustände der Bearbeitungsmaschine 10 ist für einen Bediener auswählbar, so dass der Umfang einer Projektion 28, also deren Informationsinhalt, bedarfsgerecht angepasst werden kann.

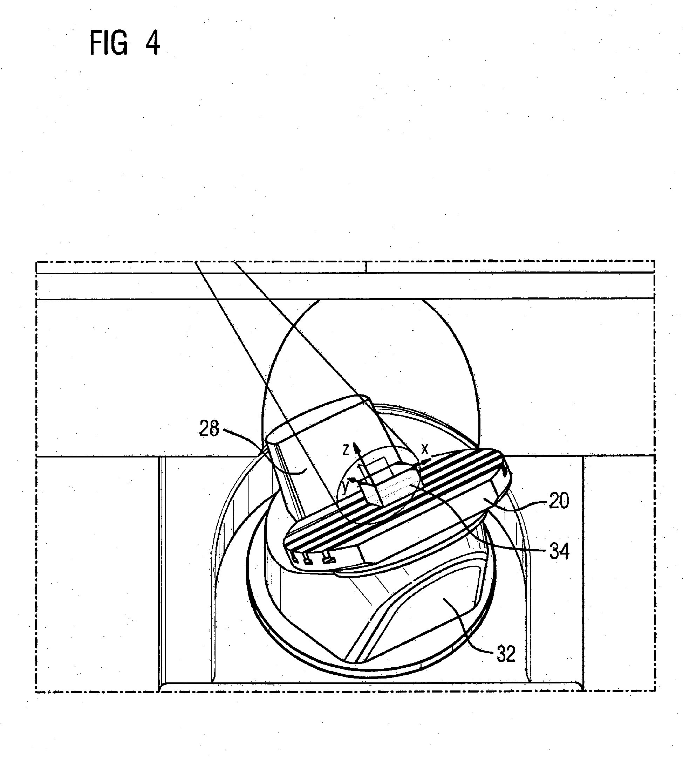

FIG 4 zeigt einen vergrößerten Ausschnitt aus der Darstellung in FIG 3, so dass auf eine erneute Erläuterung der bereits beschriebenen Einzelheiten hier verzichtet werden kann. Eine Besonderheit der in FIG 4 dargestellten Projektion 28 besteht darin, dass das als Zustand der Bearbeitungsmaschine 10 in deren Arbeitsraum projizierte Koordinatensystem an einem Werkstücknullpunkt dargestellt wird und somit unmittelbar ein Zusammenhang mit einer Beschreibung einer beim Bearbeiten des Werkstücks 34 abzufahrenden und in dem dargestellten Werkstückkoordinatensystem (WKS) auszudrückenden Kontur / Bewegungsbahn klar wird.

FIG 5 zeigt abschließend eine schematisch vereinfachte Prinzipdarstellung einer Projektionsvorrichtung 40 mit einem Projektor 24, also zum Beispiel einem 2D-Projektor 26 (FIG 1, FIG 2) oder einem 3D-Projektor (FIG 3, FIG 4). Die Projektionsvorrichtung 40 umfasst entweder einen solchen Projektor 24 oder ist mit einem solchen Projektor 24 in geeigneter Art und Weise verbunden. Die Projektionsvorrichtung 40 kann auch gleichzeitig einen 2D-Projektor und einen 3D-Projektor umfassen oder mit solchen Projektoren verbunden sein. Auch eine größere Anzahl solcher Projektoren ist möglich und sinnvoll und wird sich im Einzelfall nach den darzustellenden Betriebszuständen oder sonstigen Informationen und den räumlichen Gegebenheiten richten.

Zur Ansteuerung des oder jedes Projektors 24 umfasst die Projektionsvorrichtung 40 eine Verarbeitungseinheit 42 in Form von oder nach Art eines Mikroprozessors sowie einen Speicher 44. In den Speicher 44 ist ein Computerprogramm 46 geladen, mit dem ein Verfahren zum Betrieb einer Bearbeitungsmaschine 10 wie hier beschrieben ausführbar ist, wobei mit dem Projektor 24 ein oder mehrere Zustände der Bearbeitungsmaschine 10 in einen Arbeitsraum der Bearbeitungsmaschine 10 projiziert werden. Dafür erhält die Projektionsvorrichtung 40 von der Bearbeitungsmaschine 10, für die in FIG 4 nur vereinfacht zwei translatorische Achsen 14, 16 dargestellt sind, einerseits Informationen hinsichtlich der jeweiligen Kinematik der Bearbeitungsmaschine 10, also Informationen hinsichtlich Art und Bewegungsumfang der davon umfassten Achsen 14, 16, sowie Informationen hinsichtlich einer jeweils aktuellen Position oder Orientierung aller Achsen 14, 16 oder zumindest der wesentlichen Achsen.

Diese Zustände der Bearbeitungsmaschine 10 beschreibenden Informationen werden beim Betrieb der Bearbeitungsmaschine 10 ohnehin benötigt, wenn zum Bearbeiten eines Werkstücks 34 eine vorgegebene Bewegungsbahn abgefahren wird. Dafür umfasst die Bearbeitungsmaschine 10 selbst eine Verarbeitungseinheit 50 in Form von oder nach Art eines Mikroprozessors sowie einen Speicher 52, in den ein Bearbeitungsprogramm, zum Beispiel ein sogenanntes NC-Programm 54 oder ein RC-Programm im Falle eines als Bearbeitungsmaschine fungierenden Roboters, geladen ist, das die jeweils vorgesehene Bearbeitung des Werkstücks 34 durch die Bearbeitungsmaschine 10 beschreibt. Der insoweit erfolgende Datenaustausch zwischen der Bearbeitungsmaschine 10 und der Projektionsvorrichtung 40 ist durch den zwischen den jeweiligen Verarbeitungseinheiten 42, 50 verlaufenden Doppelpfeil dargestellt. Die Datenübertragung kann in an sich bekannter Art und Weise auf leitungslosem oder leitungsgebundenem Wege erfolgen.

Die Funktionalität der Projektionsvorrichtung 40 kann auch im Wesentlichen von der Verarbeitungseinheit 50 der Bearbeitungsmaschine 10 übernommen werden. Dann ist in deren Speicher 52 neben dem NC-Programm 54 auch das Computerprogramm 46 zur Ausführung des Verfahrens zur Projektion eines oder mehrerer Zustände der Bearbeitungsmaschine 10 in deren Arbeitsraum geladen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der angefügten Ansprüche zu verlassen.

Einzelne im Vordergrund stehende Aspekte der hier eingereichten Beschreibung lassen sich damit kurz wie folgt zusammenfassen:
Angegeben werden ein Verfahren zum Betrieb einer Bearbeitungsmaschine 10, wobei beim Betrieb der Bearbeitungsmaschine 10 mit einem Projektor 24 ein oder mehrere Zustände der Bearbeitungsmäschine 10 in einen Arbeitsraum der Bearbeitungsmaschine 10 projiziert werden, sowie eine Projektionsvorrichtung 40 zur Verwendung bei einem solchen Verfahren und schließlich eine Bearbeitungsmaschine 10 mit einer solchen Projektionsvorrichtung 40.

## Patentansprüche

1. Verfahren zum Betrieb einer Bearbeitungsmaschine (10), wobei beim Betrieb der Bearbeitungsmaschine (10) mit einem Projektor (24) ein oder mehrere Zustände der Bearbeitungsmaschine (10) in einen Arbeitsraum der Bearbeitungsmaschine (10) projiziert werden,
**dadurch gekennzeichnet, dass** die Projektion mit einem 3D-Projektor an einem vorgegebenen oder vorgebbaren Raumpunkt im Arbeitsraum erfolgt und
dass die Projektion eine Darstellung von jeweils zumindest einzelnen Achsen (14, 16) eines beim Betrieb der Bearbeitungsmaschine (10) verwendeten Koordinatensystems umfasst.

2. Verfahren nach Anspruch 1, wobei der 3D-Projektor ein 3D-Laserprojektor ist, der für sukzessive ausgesandte Laserstrahlen jeweils einen Fokuspunkt des Laserstrahls variieren kann, um an einem so bestimmten Punkt einen für das menschliche Auge sichtbaren Effekt, insbesondere eine Plasmaentladung, auszulösen.

3. Verfahren nach Anspruch 1 oder 2, wobei die Projektion an einem Werkstücknullpunkt als vorgegebenem Raumpunkt erfolgt.

4. Projektionsvorrichtung (40) mit einem Projektor (24) sowie einer Verarbeitungseinheit (42) und einem Speicher (44), wobei in den Speicher (44) ein mit der Verarbeitungseinheit (42) ausführbares Computerprogramm (46) geladen ist, mit dem ein Verfahren nach einem der vorangehenden Ansprüche ausführbar ist.

5. Computerprogramm (46) mit Programmcodemitteln, um alle Schritte von jedem beliebigen der Ansprüche 1 bis 3 durchzuführen, wenn das Computerprogramm (46) auf einer Projektionsvorrichtung nach Anspruch 4 ausgeführt wird.

6. Digitales Speichermedium in das ein Computerprogramm (46) nach Anspruch 5 geladen ist, mit elektronisch auslesbaren Steuersignalen, die so mit einer Projektionsvorrichtung (40) nach Anspruch 4 zusammenwirken können, dass ein Verfahren nach einem der Ansprüche 1 bis 3 ausgeführt wird.

7. Bearbeitungsmaschine (10) mit einer Projektionsvorrichtung (40) nach Anspruch 4.

## Claims

1. Method for operating a machine tool (10), wherein during operation of the machine tool (10) one or more states of the machine tool (10) are projected into a working area of the machine tool (10) with a projector (24),
**characterised in that** the projection is effected with a 3D projector at a predefined or predefinable point in space in the working area and
that the projection comprises a display of in each case at least individual axes (14, 16) of a coordinate system used during operation of the machine tool (10).

2. Method according to claim 1, wherein the 3D projector is a 3D laser projector which for successive laser beams emitted can in each case vary a focal point of the laser beam, in order at a point thus determined to trigger an effect visible to the human eye, in particular a plasma discharge.

3. Method according to claim 1 or 2, wherein the projection is effected at a workpiece zero point as a predefined point in space.

4. Projection device (40) with a projector (24) as well as a processing unit (42) and a memory (44), wherein a computer program (46) that can be executed with the processing unit (42) is loaded into the memory (44), with which computer program (46) a method according to one of the preceding claims can be executed.

5. Computer program (46) with program code means, in order to carry out all steps of any of the claims 1 to 3, if the computer program (46) is executed on a projection device according to claim 4.

6. Digital storage medium into which a computer program (46) according to claim 5 is loaded, with electronically readable control signals, which can interwork with a projection device (40) according to claim 4 such that a method according to one of claims 1 to 3 is executed.

7. Machine tool (10) with a projection device (40) according to claim 4.

## Revendications

1. Procédé pour faire fonctionner une machine (10) de traitement, dans lequel, lors du fonctionnement de la machine ( 10 ) de traitement, on projette, par un projecteur ( 24 ), un état ou plusieurs états de la machine ( 10 ) de traitement, dans un espace de travail de la machine ( 10 ) de traitement, **caractérisé en ce que** l'on effectue la projection par un projecteur en 3D sur un point de l'espace, prescrit ou pouvant l'être, de la chambre de travail et
**en ce que** la projection comprend une représentation de respectivement au moins des axes ( 14, 16 ) individuels d'un système de coordonnées utilisées lors du fonctionnement de la machine ( 10 ) de traitement.

2. Procédé suivant la revendication 1, dans lequel le projecteur en 3D est un projecteur laser en 3D, qui peut, pour des rayons laser émis successivement, faire varier respectivement un point focal du faisceau laser, pour déclencher, en un point ainsi déterminé, un effet visible par l'oeil humain, notamment une décharge à plasma.

3. Procédé suivant la revendication 1 ou 2, dans lequel on effectue la projection sur un point zéro de la pièce en tant que point de l'espace prescrit.

4. Dispositif ( 40 ) de projection comprenant un projecteur ( 24 ) ainsi qu'une unité ( 42 ) de traitement et une mémoire ( 44 ) , dans lequel il est chargé, dans la mémoire ( 44 ), un programme ( 46 ) d'ordinateur pouvant être exécuté par l'unité ( 42 ) de traitement et qui peut être exécuté par un procédé suivant l'une des revendications précédentes.

5. Programme ( 46 ) d'ordinateur ayant des moyens de code de programme, pour effectuer tous les stades de l'une quelconque des revendications 1 à 3, lorsque le programme ( 46 ) d'ordinateur est exécuté sur un dispositif de projection suivant la revendication 4.

6. Support de mémoire numérique, dans lequel est chargé un programme ( 46 ) d'ordinateur suivant la revendication 5, qui peut coopérer avec un dispositif ( 40 ) de projection suivant la revendication 4, de manière à exécuter un procédé suivant l'une des revendications 1 à 3.

7. Machine ( 10 ) de traitement ayant un dispositif ( 40 ) de projection suivant la revendication 4.
